# DEMANDE DE BREVET EUROPEEN

(11) **EP 3 282 334 A1**
(43) Date de publication de la demande: **14.02.2018**
(21) Numéro de dépôt: 17182759.5
(22) Date de dépôt: 24.07.2017
(51) Int. Cl.: G05D 1/00, G05D 1/08

(54) **DRONE A VOILURE FIXE, NOTAMMENT DE TYPE AILE VOLANTE, AVEC PILOTAGE MANUEL ASSISTE ET PILOTAGE AUTOMATIQUE**

(30) Priorité: 08.08.2016 FR 1657623
(71) Demandeur: Parrot Drones, 75010 Paris (FR)
(72) Inventeur: RIMOUX, Ariel, 75005 Paris (FR); PIRAT, Frédéric, 75011 Paris (FR)
(74) Mandataire: Dupuis-Latour, Dominique

(57) **Abrégé**

Le drone comprend un système de pilotage automatique (24) qui reçoit des instructions internes et/ou externes de pilotage, ainsi que des données d'attitude (ϕ*, θ*), d'altitude (z*) et de vitesse (V*) instantanées délivrées par des capteurs (48, 50, 58, 60, 62, 68, 70). Des circuits de calcul de consignes (36, 38, 40) calculent, en fonction d'un modèle du comportement aérodynamique du drone en vol, des consignes d'angles de roulis (ϕ) et/ou de tangage (θ) et/ou des consignes de vitesse (V) et/ou des consignes d'altitude (z) correspondant aux instructions internes et/ou externes de pilotage reçues. Des circuits de correction et de contrôle (44, 44, 52, 54, 64) commandent le système de propulsion (28) et les servomécanismes (30) des gouvernes du drone. Un système (26) permet en outre de générer en interne des instructions de pilotage pour des modes de vol autonome tels que décollage automatique ou atterrissage automatique.

## Description

L'invention concerne les appareils motorisés volants pilotés à distance, ci-après désignés généralement sous la dénomination de "drones".

L'invention s'applique spécifiquement aux drones à voilure fixe, notamment de type "aile volante" tel que par exemple le modèle *eBee* de SenseFly, Cheseaux-Lausanne, Suisse, qui est un drone de cartographie professionnelle de terrain, ou encore le modèle *Disco* récemment présenté par Parrot SA, Paris, France (cf. la brève de B Popper "Parrot's new *Disco* drone ditches quadcopter design for a fixed-wing aircraft" postée sur *theverge.com* le 4 janvier 2016).

Ces drones sont pilotés à distance par un utilisateur muni d'une télécommande lui permettant d'envoyer des instructions de pilotage telles que montée, descente, virage à droite ou à gauche, accélération/ralentissement, etc., et de visualiser sur un écran installé sur la télécommande les images captées par une caméra du drone. Le drone, de son côté, génère des commandes de contrôle de vol en fonction des instructions reçues de la télécommande : régime moteur du système de propulsion, commandes de gouvernes, etc. Ces commandes sont asservies en fonction de données fournies par de multiples capteurs embarqués par le drone, tels que centrale inertielle (accéléromètres et gyromètres trois axes), capteurs d'altitude (baromètre, télémètre à ultrasons), dispositif de mesure de la vitesse air et/ou de la vitesse sol, etc.

Les drones à voilure fixe, tout particulièrement ceux de type "aile volante", peuvent évoluer à des vitesses élevées, typiquement jusqu'à 80 km/h, et sont souvent assez difficiles à piloter compte tenu de leur très grande réactivité aux instructions de pilotage envoyées depuis la télécommande, et de la nécessité de conserver une vitesse de vol minimale, supérieure à la vitesse de décrochage. Ces contraintes n'existent pas avec les drones à voilure tournante, par exemple de type quadricoptère, qui peuvent tenir un point fixe et évoluer aussi lentement que souhaité, ce qui les rend beaucoup plus faciles à piloter même par des utilisateurs inexpérimentés.

Un drone à voilure fixe comprend un système de propulsion avec une ou plusieurs hélices entrainées par un moteur, et des gouvernes contrôlées par des servomécanismes respectifs. Les évolutions en vol du drone sont commandées en faisant varier le régime du ou des moteurs (variation contrôlée du courant d'alimentation) et en agissant sur les gouvernes afin de contrôler la trajectoire du drone.

Avec sa télécommande munie de commandes proportionnelles de type manche à balai, l'utilisateur fait varier le régime moteur pour augmenter ou réduire la force propulsive, et agit sur les différentes gouvernes du drone pour modifier l'attitude de celui-ci.

Le pilotage d'un tel drone nécessite une certaine habitude, que savent acquérir les utilisateurs qui évoluent dans l'univers de l'aéromodélisme. En revanche, pour les utilisateurs novices ou simplement occasionnels, le pilotage d'un drone à voilure fixe n'est pas intuitif, et les risques d'erreurs sont importants, avec pour conséquence des risques de chute, de perte de contrôle du drone, etc.

Ces difficultés sont accrues de façon particulièrement critique dans le cas des drones de type aile volante. En effet, ces drones sont dépourvus d'empennage et de dérive, et ne disposent donc d'aucune surface verticale mobile de contrôle de direction (comme un volet placé sur la dérive, dans le cas d'un aéronef conventionnel). L'aile volante n'est pourvue, comme gouvernes, que de deux volets mobiles placés sur les bords de fuite des ailes : des déplacements de ces volets dans le même sens modifient l'attitude en tangage (angle θ) du drone, tandis que des déplacements en sens opposés de ces deux volets modifient l'attitude en roulis (angle ϕ) du drone, et celui-ci ne dispose pas d'autre moyen aérodynamique de contrôle de trajectoire, mis à part la commande du régime moteur.

Pour faire évoluer le drone, l'utilisateur doit donc contrôler depuis sa télécommande la position des deux volets pour modifier l'attitude en tangage et en roulis du drone, modification éventuellement accompagnée d'une augmentation ou d'une diminution de la vitesse.

Un tel mode de pilotage est tout sauf facile et intuitif, et la difficulté est en outre accrue par le caractère très instable, en particulier en virage, d'une aile volante par rapport à un aéronef muni d'une dérive, et c'est pourquoi les aéronefs de ce type sont assez peu répandus.

Pour pallier cette difficulté, il a été proposé, comme cela est décrit dans l'article de A Bittar et al., "Central Processing Unit for an Autopilot: Description and Hardware-in-the-Loop Simulation", Journal of Intelligent and Robotic Systems, Vol. 70, No 1-4, 4 août 2012, pp. 557-574, de préserver l'agrément du pilotage manuel par l'utilisateur, en lui offrant un mode de pilotage assisté où il n'a besoin de gérer que des commandes simplifiées (ci-après "instructions") du type "tourner à droite" ou "tourner à gauche", "monter" ou "descendre", "accélérer" ou "ralentir", ces instructions étant générées par exemple à l'aide de manches à balai de l'appareil de radio-commande.

Un logiciel embarqué d'autopilotage traduit ces instructions très simples en consignes d'attitude de l'aéronef, c'est-à-dire en consignes d'angle de roulis et consignes d'angle de tangage, ainsi qu'en consignes de vitesse. Les consignes ainsi produites par l'autopilote sont comparées, au sein de boucles de régulation appropriées, aux données produites par des capteurs embarqués qui évaluent à tout moment l'attitude instantanée réelle de l'aéronef, son altitude, sa vitesse air et/ou sol, etc. pour élaborer des commandes appropriées des servomécanismes d'orientation des gouvernes pour le contrôle de l'attitude, et des commandes du système de propulsion pour le contrôle de la vitesse.

Toutefois, même avec ces commandes simplifiées, l'utilisateur doit en tout état de cause assurer le pilotage de façon ininterrompue et quelles que soient les circonstances.

Il n'a pas, par exemple, la possibilité de lâcher les commandes de son appareil de télécommande, en ne touchant plus aux manches à balai, en n'appuyant sur aucun bouton, etc.

Avec un drone à voilure tournante tel qu'un quadricoptère, une telle manoeuvre provoquerait immédiatement le passage à une configuration de vol stationnaire où le drone est maintenu en vol, en point fixe, à l'altitude où il se trouvait au moment du lâcher des commandes.

En revanche, dans le cas d'un drone à voilure fixe, cette manière de procéder n'est pas possible, car le drone ne peut pas s'immobiliser, au risque d'un décrochage.

L'un des buts de la présente invention est de permettre à l'utilisateur de s'affranchir de cette limitation, en lui offrant la possibilité de quitter le mode de pilotage manuel (assisté par l'autopilote) pour un mode de pilotage entièrement automatique, enclenché par exemple par une commande intuitive consistant à simplement lâcher les commandes de l'appareil de télécommande.

Selon un autre aspect du problème, on soulignera le caractère très délicat des phases de décollage et d'atterrissage d'un drone à voilure fixe, qui demandent beaucoup d'expérience.

En effet, dans le cas d'un drone à voilure tournante, par exemple un quadricoptère, le décollage se fait avec le drone posé au sol ; la mise en route et la montée en régime progressive des moteurs permettent au drone de s'élever lentement, généralement jusqu'à une position de point fixe à une distance prédéterminée au-dessus du sol, à partir de laquelle il pourra commencer à évoluer selon une trajectoire choisie et contrôlée. Inversement, pour l'atterrissage le drone commence par se mettre en point fixe puis descend lentement vers le sol par réduction progressive du régime des moteurs.

En revanche, dans le cas d'un drone à voilure fixe une telle procédure n'est pas possible compte tenu de la contrainte d'une vitesse de sustentation minimale. Pour le décollage, le drone doit être tenu à la main par l'utilisateur puis lancé face au vent avec le moteur fonctionnant à un régime suffisant pour empêcher le décrochage. Et pour l'atterrissage, il convient de réduire progressivement la vitesse du drone pour le faire descendre en pente douce depuis son altitude de croisière jusqu'au niveau du sol à la vitesse la plus faible possible, de manière que le décrochage ne survienne qu'à proximité immédiate du niveau du sol pour ne pas endommager le drone au moment de l'atterrissage.

Comme on le conçoit aisément, ces phases extrêmement critiques nécessitent une habileté particulière de l'utilisateur, et donc beaucoup d'expérience du pilotage de ce type d'aéronefs.

Il en est de même si l'utilisateur cherche à faire évoluer l'aéronef sur une trajectoire prédéterminée, telle qu'une orbite circulaire stable (*loiter* en terminologie aéronautique), une trajectoire en spirale, etc. Ces trajectoires nécessitent des actions simultanées sur plusieurs commandes, non seulement pour suivre la trajectoire voulue, mais également pour compenser les perturbations diverses que peut subir l'aéronef, tout particulièrement l'effet d'un vent latéral.

Ainsi, pour résoudre ce problème et de façon générale pour faciliter autant que faire se peut le pilotage d'un drone à voilure fixe, un autre but de l'invention est d'offrir à l'utilisateur un certain nombre de modes de vol autonome du drone, gérés par un système automatique.

Il s'agit en particulier de gérer de façon entièrement automatique et dans les meilleures conditions les phases critiques de décollage et/ou d'atterrissage du drone, sans que l'utilisateur n'ait à intervenir - en réservant éventuellement une option pour lui ménager une possibilité de "surpilotage", c'est-à-dire de superposition d'instructions manuelles aux instructions générées en interne par l'autopilote embarqué.

Pour atteindre ces buts, l'invention propose un drone à voilure fixe d'un type divulgué par l'article de A Bittar et al. précité, comprenant un système de propulsion, des gouvernes et un pilote automatique.

Plus précisément, le pilote automatique est configuré pour :
- calculer des consignes en fonction d'instructions, lesdites instructions comprenant des instructions internes de pilotage générées par le pilote automatique et des instructions externes reçues par le drone, lesdites instructions internes et/ou externes comprenant des instructions de virage, des instructions de montée/descente et des instructions de changement de vitesse, et lesdites consignes incluant une consigne d'angle de roulis, une consigne d'angle de tangage et une consigne de vitesse pour la mise en oeuvre des instructions internes et/ou externes ; et
- commander le système de propulsion et les gouvernes en fonction des consignes calculées.

Le pilote automatique est en outre configuré pour, sur application d'une instruction de virage et/ou d'une instruction de changement de vitesse, calculer ladite consigne d'angle de roulis, ladite consigne d'angle de tangage et ladite consigne de vitesse de manière à effectuer un virage et/ou à changer de vitesse en maintenant constante une altitude du drone lors du virage et/ou du changement de vitesse.

De façon caractéristique de l'invention, le pilote automatique est en outre configuré pour, sur cessation de réception d'au moins certaines desdites instructions externes de pilotage, générer ladite consigne d'angle de roulis, ladite consigne d'angle de tangage et ladite consigne de vitesse de manière à maintenir constants le cap et l'altitude qu'avait le drone au moment de ladite cessation de réception d'au moins certaines desdites instructions externes de pilotage.

De préférence, le pilote automatique est configuré pour, sur cessation de réception de toute instruction externe de pilotage, générer ladite consigne d'angle de roulis, ladite consigne d'angle de tangage et ladite consigne de vitesse de manière à maintenir en outre constante la vitesse qu'avait le drone au moment de ladite cessation de réception de toute instruction externe de pilotage.

Dans une forme particulière, avantageuses de mise en oeuvre, lesdites au moins certaines instructions externes de pilotage comprennent les instructions externes de pilotage en virage et les instructions externes de pilotage en montée/descente, et ne comprennent pas les instructions externes de pilotage en vitesse.

Dans ce cas, le pilote automatique peut être en outre configuré pour, sur réception d'instructions externes de pilotage en vitesse et sans réception d'instructions externes de pilotage en virage ni réception d'instructions externes de pilotage en montée/descente, continuer de générer ladite consigne d'angle de roulis et ladite consigne d'angle de tangage de manière à maintenir constants le cap et l'altitude qu'avait le drone au moment de ladite cessation de réception d'instructions externes de pilotage en virage et d'instructions externes de pilotage en montée/descente, et générer ladite consigne de vitesse à partir des instructions externes de pilotage en montée/descente reçues.

Dans ce même cas, le pilote automatique peut également être configuré pou, sur réception d'instructions externes de pilotage en virage ou d'instructions externes de pilotage en montée/descente, cesser de générer ladite consigne d'angle de roulis, ladite consigne d'angle de tangage et ladite consigne de vitesse qui avaient été générées de manière à maintenir constants le cap et l'altitude qu'avait le drone au moment de ladite cessation de réception d'instructions externes de pilotage en virage et d'instructions externes de pilotage en montée/descente.

Selon diverses caractéristiques subsidiaires avantageuses de la présente invention :
- dans un mode de fonctionnement autonome, le pilote automatique est configuré pour générer des instructions internes de pilotage incluant des instructions de virage, des instructions de montée/descente, et/ou des instructions de vitesse ;
- le pilote automatique est configuré pour générer des instructions internes de pilotage selon un mode de décollage automatique avec une phase de montée à une altitude prédéterminée suivie d'une phase d'attente en vol orbital à l'altitude prédéterminée ;
- ce mode de décollage automatique comprend successivement : une phase de mise en fonctionnement du groupe propulseur du système de propulsion à un régime lent, une phase de mise en fonctionnement du groupe propulseur à un régime plus rapide, une phase de montée en ligne droite avec maintien du cap, et ladite phase d'attente en vol orbital lorsque ladite altitude prédéterminée est atteinte ;
- le pilote automatique est configuré pour générer des instructions internes de pilotage selon un mode d'atterrissage automatique avec superposition éventuelle, aux instructions de pilotage générées par le pilote automatique, d'instructions externes de pilotage reçues par le drone ;
- ce mode d'atterrissage automatique comprend successivement : une phase de descente à une altitude prédéterminée, une phase de descente selon une trajectoire hélicoïdale ou selon une trajectoire linéaire, et une phase d'inversion du sens de rotation du groupe propulseur du système de propulsion ;
- le pilote automatique est configuré pour calculer les consignes en fonction d'une différence entre la vitesse air du drone et la vitesse sol du drone ;
- le pilote automatique est configuré pour calculer les consignes de manière à voler à vitesse air constante ou à vitesse sol constante dans un mode de fonctionnement à vitesse constante ;
- pour la réalisation d'une instruction de virage, le pilote automatique est configuré pour calculer les consignes de manière à réaliser le virage avec un taux de virage constant par rapport au sol.

La présente invention vise également un procédé de pilotage d'un drone, ce procédé comprenant les étapes ci-dessus exposées mises en oeuvre par le pilote automatique du drone.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale montrant un drone à voilure fixe de type aile volante, évoluant dans les airs sous le contrôle d'un équipement de télécommande distant.
La Figure 2 est un schéma très simplifié des différents blocs fonctionnels du drone et de la télécommande.
La Figure 3 est un schéma par blocs fonctionnels d'un pilote automatique intégré au sein du drone pour la mise en oeuvre de la présente invention.
La Figure 4 illustre un exemple de répartition ergonomique de commandes mises à disposition de l'utilisateur sur sa télécommande.
La Figure 5 est un diagramme d'étapes illustrant notamment les possibilités de transition entre mode de pilotage manuel assisté et mode de pilotage en vol autonome.
La Figure 6 illustre le mode de vol autonome de mise en orbite et de retour automatique au point de départ.
La Figure 7 illustre la manoeuvre de lancement du drone au décollage.
La Figure 8 est un diagramme d'étapes illustrant le mode de vol autonome de décollage du drone.
Les Figures 9a et 9b illustrent la manoeuvre d'atterrissage du drone, respectivement circulaire ou linéaire.
La Figure 10 est un diagramme d'étapes illustrant le mode de vol autonome d'atterrissage du drone.

On va maintenant décrire un exemple de réalisation du dispositif de l'invention.

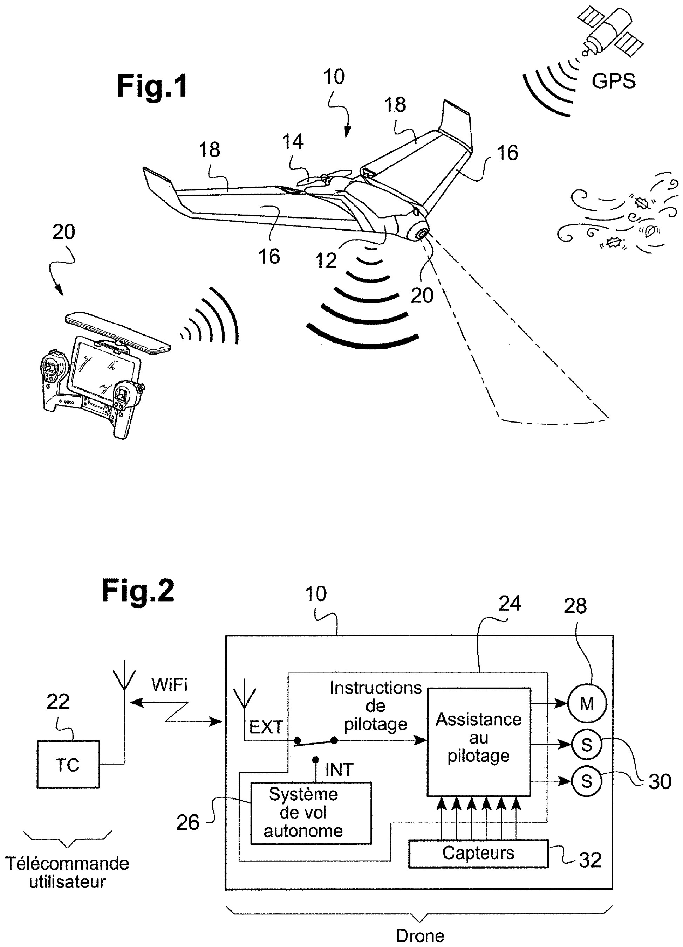

Sur la Figure 1, on a illustré un drone 10, ici un drone à voilure fixe de type aile volante tel que le modèle *Disco* de Parrot.

Ce drone 10 comprend un corps de drone (fuselage) 12 muni en partie arrière d'un système de propulsion composé par exemple d'un moteur et d'une hélice 14 et latéralement de deux ailes 16, ces ailes prolongeant le corps de drone 12 dans la configuration illustrée de type "aile volante". Du côté du bord de fuite, les ailes 16 sont munies de gouvernes 18 orientables au moyen de servomécanismes pour contrôler la trajectoire du drone. Le drone est également muni d'une caméra frontale 20 permettant d'obtenir une image de la scène vers laquelle progresse le drone.

Le drone 10 est piloté par un appareil de télécommande distant 22 pourvu d'un écran tactile configuré pour afficher l'image captée par la caméra 20, ainsi que de diverses commandes de pilotage à disposition de l'utilisateur. L'appareil de télécommande 22 est par exemple le modèle *Skycon-troller* de Parrot, sur lequel a été montée une tablette numérique multimedia à écran tactile. L'appareil de télécommande 22 est également pourvu de moyens de liaison radio avec le drone, par exemple de type réseau local WiFi (IEEE 802.11), pour l'échange bidirectionnel de données: du drone 10 vers l'appareil de télécommande 22 notamment par la transmission de l'image captée par la caméra 20, et de l'appareil de télécommande 22 vers le drone pour l'envoi à ce dernier d'instructions de pilotage. L'utilisateur peut également faire usage de lunettes de pilotage en immersion, dites "lunettes FPV" (*First Person View*).

La Figure 2 est un schéma fonctionnel très simplifié de l'ensemble constitué par le drone 10 et l'appareil de télécommande 22. Le drone 10 comprend un pilote automatique 24 configuré pour implémenter une assistance au pilotage du drone 10. Le pilote automatique inclut un certain nombre de modules. Le pilote automatique 24 reçoit en entrée des instructions de pilotage en provenance de l'appareil de télécommande 22 ("instructions externes de pilotage"), c'est-à-dire des instructions envoyées par l'utilisateur depuis l'appareil de télécommande 22 en mode de pilotage assisté, instructions qui sont transmises par voie hertzienne entre l'appareil de télécommande 22 et le drone 10.

Le pilote automatique est en outre configuré pour générer automatiquement des instructions de pilotage ("instructions internes de pilotage"). Le pilote automatique comprend à cet effet un module 26 de vol autonome. Le pilote automatique est configuré pour générer des instructions internes de pilotage, par exemple en mode de décollage automatique, atterrissage automatique, etc. On notera que dans un mode particulier de "surpilotage" l'utilisateur a la faculté de superposer ses propres instructions à celles automatiquement générées par le module de vol autonome 26, par exemple pour intervenir sur une trajectoire imposée par ce système afin de corriger cette trajectoire au gré de l'utilisateur.

Le système de propulsion du drone 10 comprend un groupe propulseur comprenant l'hélice 14 et un moteur 28 pour l'entrainement en rotation de l'hélice 14. Le drone 10 comprend des servomoteurs 30 pour commander la position des gouvernes 18.

À partir des instructions de pilotage ainsi reçues, le pilote automatique 24 génère des commandes à destination du moteur 28, et des servomoteurs 30 de commande des gouvernes 18.

Dans l'exemple illustré d'un drone de type "aile volante", le moteur 28 est unique et les servomoteurs 30 sont au nombre de deux seulement (un servomoteur respectif pour chacune des deux gouvernes 18). Il ne s'agit là toutefois que d'un exemple illustratif, un drone pouvant être doté de plusieurs groupes propulseurs donc de plusieurs moteurs correspondants, et de gouvernes supplémentaires, par exemple dans le cas d'un drone à voilure fixe muni d'un empennage et d'une dérive en partie arrière, qui ne serait donc pas de type aile volante.

Le drone est également muni d'un ensemble 32 de capteurs délivrant de façon dynamique au pilote automatique 24 des informations sur l'attitude, l'altitude et la vitesse instantanées réelles du drone.

L'ensemble de capteurs 32 comprend par exemple :
- une centrale inertielle (IMU) comprenant des accéléromètres et des gyromètres trois axes ;
- un capteur de mesure de la vitesse air du drone, relié à une prise de pression dynamique d'un élément de type "sonde de Pitot" ;
- un module GPS donnant la position absolue du drone dans un repère géographique ;
- un capteur barométrique permettant de déterminer les variations d'altitude du drone (variations instantanées et variations par rapport à une altitude de départ connue) ;
- un capteur magnétométrique donnant l'orientation du drone par rapport au nord géographique ;
- un capteur télémétrique à ultrasons donnant l'altitude du drone par rapport au terrain survolé ; et
- une caméra à visée verticale donnant une image du terrain survolé et permettant de déterminer, par un traitement d'images, la vitesse du drone par rapport à ce terrain (vitesse sol, par opposition à la vitesse air donnée par la sonde de Pitot).

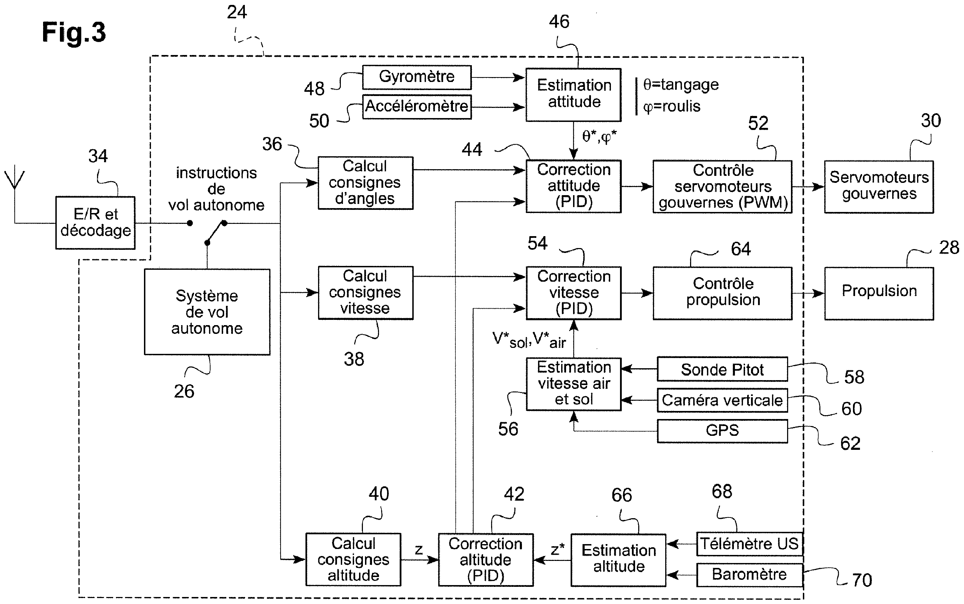

On va maintenant décrire, en référence au schéma par blocs de la Figure 3, les différents organes de pilotage assisté et de pilotage en vol autonome du drone, selon l'invention.

Les instructions de pilotage provenant de la télécommande utilisateur en mode de pilotage assisté ("instructions externes") sont reçues et décodées par un module décodeur 34, qui délivre des instructions de type "tourner à droite" ou "tourner à gauche", "monter" ou "descendre", "accélérer" ou "ralentir". Ces instructions sont par exemple des instructions proportionnelles générées au moyen de manipulateurs ou commandes tels que des manches à balai de l'appareil de télécommande 22 en fonction de l'évolution que l'utilisateur souhaite donner à la trajectoire du drone.

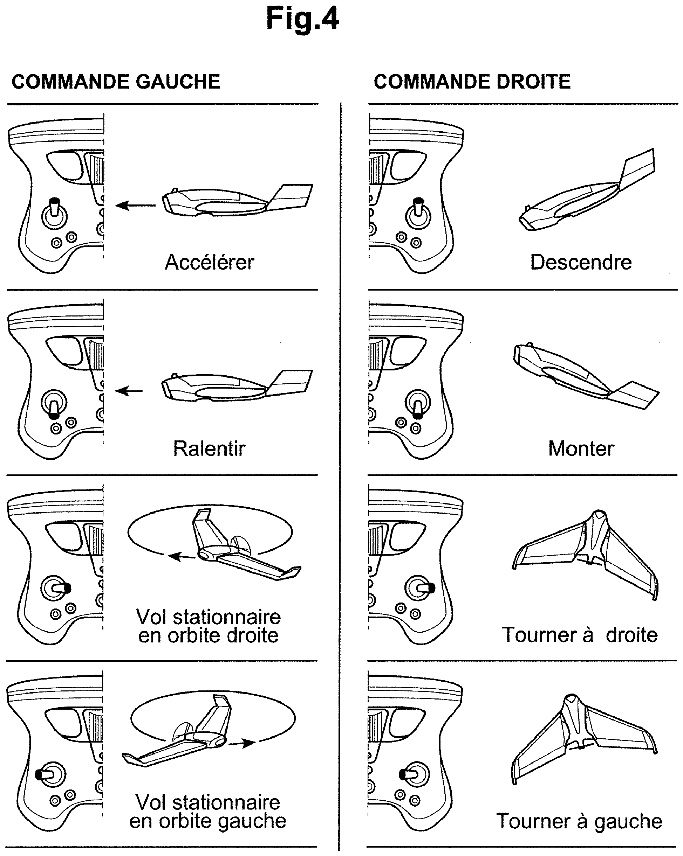

La Figure 4 illustre un exemple de répartition ergonomique des commandes à disposition de l'utilisateur sur l'appareil de télécommande 22 :
- avec le manche à balai (*joystick*) situé côté gauche :
   - manche actionné vers le haut ou vers le bas : accélérer/ralentir
   - manche actionné vers la droite ou vers la gauche : vol stationnaire en orbite (*loiter*) droite ou gauche,
- avec le manche à balai (*joystick*) situé côté droit :
   - manche actionné vers le haut ou vers le bas : monter/descendre
   - manche actionné vers la droite ou vers la gauche : tourner à gauche/tourner à droite.

En mode de vol autonome, le module de vol autonome 26 du pilote automatique 24 génère lui-même des instructions ("instructions internes") correspondant à une trajectoire imposée telle que par exemple décollage automatique, atterrissage automatique, orbite autour d'un point prédéterminé, etc. On notera par ailleurs que, dans un mode particulier de "surpilotage" l'utilisateur a la faculté de superposer ses propres instructions (externes) à celles automatiquement générées (internes) par le module de vol autonome 26, par exemple pour intervenir sur une trajectoire imposée par le module de vol autonome 26 afin de corriger cette trajectoire.

### Fonctionnement de l'autopilote

Les instructions externes de pilotage et/ou internes sont appliquées à un module 36 de calcul de consignes d'angles d'attitude du drone (consignes θ d'angle de tangage et ϕ d'angle de roulis), à un module 38 de calcul de consignes de vitesse du drone (consigne V de vitesse), et à un module 40 de calcul de consignes d'altitude du drone (consigne z d'altitude).

À partir i) des instructions externes et/ou internes de pilotage telles que définies plus haut et ii) d'un modèle du comportement aérodynamique du drone en vol, préalablement déterminé et conservé en mémoire, chacun des modules 36, 38, 40 détermine des consignes correspondantes, respectivement d'angle de tangage θ et d'angle de roulis ϕ, de vitesse V et d'altitude z.

Pour une instruction interne ou externe de virage, le module 36 de calcul de consignes d'angles détermine au moins une consigne d'angle telle que le roulis ϕ, une consigne de tangage θ étant produite par un module de correction d'altitude 42, qui sera décrit en détail plus bas. En effet, une instruction en virage nécessite d'agir sur le moteur et sur les gouvernes, car en tournant le drone va perdre de la vitesse. Si aucune instruction de changement de vitesse ou d'altitude n'est donnée par l'utilisateur avec l'instruction de virage, pour compenser la perte d'altitude le module de correction d'altitude 42 détermine des consignes de tangage et de vitesse, calculées à partir de la dernière instruction avant l'instruction de virage pour maintenir le drone à vitesse et altitude constante pendant le virage.

Les consignes d'angle de tangage θ et d'angle de roulis ϕ produites par le module 36 et par le module 42 sont appliquées à un module de correction d'attitude 44 de type régulateur PID. Ce module 44 corrige les consignes délivrées par les modules 36 et 42 en fonction de l'attitude instantanée effective du drone (angle de tangage θ* et angle de roulis ϕ*), déterminée par un module 46 d'estimation d'attitude à partir des données gyrométriques et accélérométriques fournies par les capteurs 48 et 50 de la centrale inertielle du drone.

Les consignes corrigées résultantes produites en sortie du module 44 sont transmises à un module de puissance 52 de contrôle des servomoteurs des gouvernes. Ce module génère des signaux PWM contrôlés, appliqués aux différents servomoteurs 30 d'entrainement des gouvernes. Pour une instruction interne ou externe d'augmentation/diminution de vitesse, le module 38 de calcul de consignes de vitesse détermine une consigne de vitesse V. Une seconde consigne de vitesse V est déterminée par le module 42 précité de correction d'altitude (module qui détermine également la consigne de tangage θ).

Les consignes de vitesse V produites par le module 38 et par le module 42 sont appliquées à un module de correction de vitesse 54 de type régulateur PID (les deux consignes de vitesse étant combinées avec priorité de correction donnée au maintien de l'altitude). Ce module 54 corrige la consigne de vitesse V délivrée par les modules 38 et 42 et en fonction des vitesses sol V*ₛₒₗ et air V*ₐᵢᵣ instantanées effectives du drone, telles que déterminées par un module 56 d'estimation des vitesses air et sol du drone à partir des données délivrées par la sonde de Pitot 58 (pour la vitesse air) et par l'analyse de l'image de la caméra verticale 60 ainsi que par les données du module GPS 62 (pour la vitesse sol).

Les consignes de vitesse corrigées résultantes produites en sortie du module 54 sont transmises à un module de puissance 64 de contrôle du groupe propulseur 28. Ce module 64 génère un courant contrôlé permettant de faire varier de la manière voulue le régime du groupe propulseur 28, et donc la poussée de l'hélice 14.

Les instructions, internes ou externes, de montée/descente et/ou de virage sont appliquées au module de calcul de consigne d'altitude 40, qui délivre une consigne z d'altitude du drone. Cette consigne z est appliquée au module 42 de correction d'altitude, qui est par exemple un module de type régulateur PID. Ce module 42 corrige la consigne d'altitude z en fonction de l'altitude instantanée effective z* du drone, déterminée par un module 66 d'estimation d'altitude à partir des données fournies par le module GPS 62, par le télémètre à ultrasons 68 et par le capteur barométrique 70. Ici encore, lorsqu'une instruction de vitesse est donnée, les modules de correction d'altitude 42 et d'attitude 44 calculent les consignes de manière à donner la priorité au maintien de l'altitude et du cap du drone.

Les consignes corrigées résultantes de correction d'altitude délivrées par le module 42 comprennent une consigne de tangage θ et une consigne de vitesse V, car l'augmentation de l'altitude du drone est produite en augmentant le régime moteur et en cabrant le drone, et *vice versa* pour une diminution de l'altitude (une perte d'altitude pouvant également, comme expliqué plus haut, résulter d'une instruction de virage, cette perte d'altitude devant être compensée).

Dans un mode de réalisation particulier, les modules du pilote automatique 24 sont mis en oeuvre de manière logicielle. Les modules sont prévus sous la forme d'applications logicielles enregistrées dans une mémoire du drone 10 et exécutée par un processeur du drone 10. En variante, au moins un des modules est un circuit électronique spécifique ou un circuit logique programmable.

On va maintenant exposer la manière dont est opéré, manuellement ou automatiquement, le pilotage de l'aile volante grâce aux circuits que l'on vient de décrire.

### Pilotage manuel assisté

En mode manuel (ou pilotage assisté), l'assistance au pilotage assure en particulier la gestion automatique du roulis, du tangage et de la vitesse du drone.

Dans une configuration de pilotage conventionnel d'une aile volante, l'utilisateur tente d'ajuster au mieux le roulis et le tangage par une manoeuvre séparée des deux gouvernes du drone. Si l'utilisateur imprime à l'aile une inclinaison en roulis, l'aile va pencher sur le côté et commencera à tourner du côté où elle s'incline. Mais, du fait qu'elle n'est plus à plat, l'aile perd de la portance, et donc de l'altitude. L'utilisateur doit donc, pour compenser cette perte d'altitude, augmenter la commande de tangage, de manière à cabrer légèrement le drone et augmenter ainsi la force ascensionnelle et/ou la vitesse du drone. Ainsi, avec un pilotage conventionnel, pour un simple virage il est nécessaire d'agir à la fois sur le roulis, sur le tangage et sur la vitesse du drone.

Avec un pilotage assisté, l'ajustement du roulis, du tangage et de la vitesse est opéré de façon transparente pour l'utilisateur, qui adresse seulement une instruction "tourner à gauche" ou "tourner à droite", l'aile virant automatiquement dans le sens prescrit et sans perdre d'altitude. Selon un autre aspect, l'utilisateur peut envoyer des instructions d'accélération ou de ralentissement, c'est-à-dire de diminution ou d'augmentation de la vitesse. Grâce au pilotage assisté, dans tous les choix de vitesse possibles l'aile maintient automatiquement son altitude, sans qu'il soit nécessaire pour l'utilisateur de donner des instructions de modification du tangage (pour éviter que l'aile ne prenne de l'altitude quand la vitesse augmente) s'il veut seulement accélérer le drone, à altitude constante. Par défaut, la vitesse du drone gérée par le pilotage assisté est celle privilégiant l'autonomie maximale. Si, sur réception d'une instruction utilisateur quelle qu'elle soit (virage, montée/descente) la vitesse du drone est trop faible pour que l'action demandée puisse être exécutée sans décrochage, le pilotage assisté augmente automatiquement la vitesse de rotation pour augmenter la poussée, et donc la vitesse, et permettre ainsi l'exécution de l'instruction adressée par l'utilisateur.

En ce qui concerne la gestion de l'altitude, celle-ci est, comme décrit plus haut, commandée par le régulateur PID du module 42, en fonction de la différence entre la consigne d'altitude z que l'on veut que le drone maintienne, et l'altitude effective instantanée z* estimée à partir des mesures des capteurs. Une compensation supplémentaire de vitesse peut être produite lorsque cette différence est supérieure à une valeur prédéterminée, par exemple lorsque l'altitude réelle du drone est à plus de 3 mètres en dessous de l'altitude de consigne. D'autre part, une limitation physique peut être activée pour limiter l'altitude du drone entre des valeurs minimale et maximale.

Un autre aspect avantageux du pilotage assisté est celui de la compensation des effets du vent latéral (la direction et l'intensité du vent latéral peuvent être estimées en calculant la différence entre la vitesse air et la vitesse sol, pour différentes valeurs d'angles de lacet).

Le pilotage assisté dispose des données produites par le module GPS, notamment la direction du cap suivi par le drone, ce qui permet de conserver une trajectoire rectiligne. En présence de vent moyen ou de rafales, le pilotage assisté compense automatiquement la poussée exercée par le vent sur le drone et maintient une direction de vol en ligne droite. Pour que le drone aille dans une direction droite, un point de repère ou *waypoint* (voir plus bas) est calculé à partir de la position estimée du drone et de sa direction de déplacement, et le pilotage assisté asservit la trajectoire du drone de manière que celui-ci suive la ligne allant à ce *waypoint.*

Dans le cas d'un vent de face, qui peut même empêcher le drone d'avancer (la vitesse sol étant alors négative), le pilotage assisté peut compenser le vent par analyse de la vitesse sol et par correction de la consigne de vitesse de manière à garantir une vitesse sol minimale, par exemple de 5 m/s, pour que le drone puisse toujours avancer par rapport au sol. En ce qui concerne les instructions de virage à droite ou à gauche, celles-ci sont très avantageusement des instructions de virage à taux de virage constant.

Un virage à taux constant consiste à faire suivre au drone une trajectoire circulaire, avec une vitesse linéaire prédéterminée et une altitude constante. L'utilisateur n'aura alors qu'un seul degré de liberté à maitriser (le "taux de virage"), essentiellement lié au rayon plus ou moins grand de la trajectoire circulaire (le virage étant d'autant plus serré que le rayon de courbure est plus faible), ce qui rend la maitrise du drone en virage très aisée et intuitive. Il devient ainsi possible de négocier très facilement des virages, de les enchainer à un rythme soutenu, etc., bien plus facilement qu'en pilotage traditionnel où l'utilisateur doit combiner et maitriser des commandes de roulis et de tangage. Avec le système de pilotage assisté de l'invention, il suffit à l'utilisateur de donner une simple consigne de taux de virage (virage plus ou moins serré), éventuellement complété par une instruction d'accélération ou de ralentissement.

Bien entendu, le pilotage assisté fait en sorte que, quelles que soient les instructions produites par l'utilisateur, les consignes calculées en fonction de ces instructions restent toujours dans les limites aérodynamiquement acceptables de vol du drone, notamment :
- vitesse maximale du drone,
- vitesse minimale du drone (vitesse de décrochage),
- taux maximal de virage (principalement fonction de la vitesse air), et
- taux maximal de montée/descente.

### Transition pilotage manuel assisté/pilotage en vol autonome

Une fonctionnalité avantageuse, caractéristique de l'invention, est la possibilité de quitter le mode de pilotage manuel assisté pour un mode de pilotage entièrement automatique par une commande intuitive où l'utilisateur lâche simplement les commandes de son appareil de télécommande, par exemple ne touche plus aux manches à balai, n'appuie sur aucun bouton, ne touche plus l'écran tactile, etc.

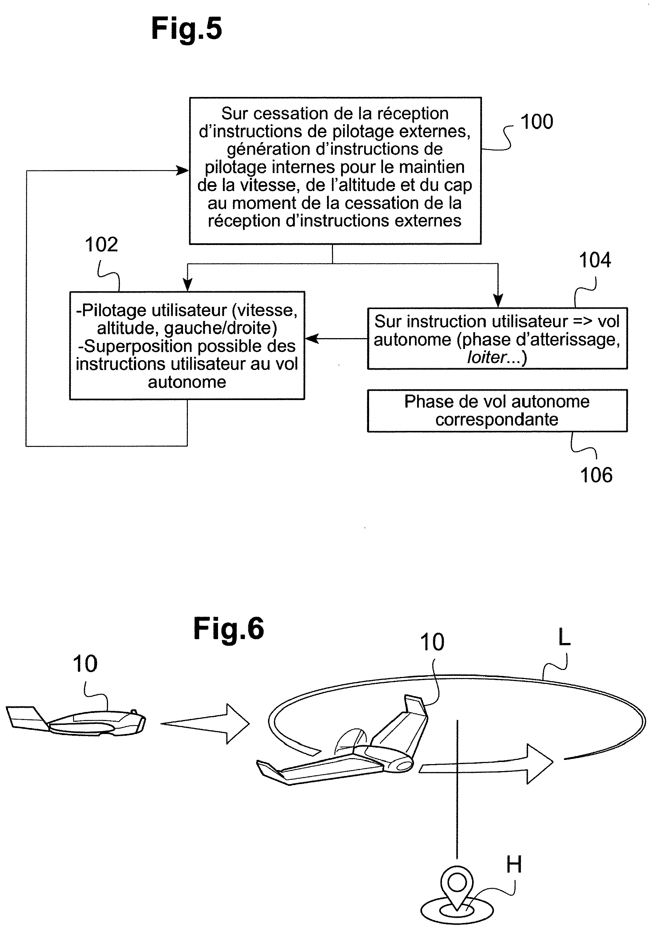

Cet aspect de l'invention est notamment illustré par le diagramme d'étapes de la Figure 5.

La cessation de la réception d'instructions externes de pilotage par l'utilisateur (bloc 100 sur la Figure 5) enclenche le pilotage automatique du drone suivant une trajectoire à altitude constante et à vitesse air constante, dans la même direction (angle de cap) que celle qu'il avait au moment où l'utilisateur a lâché les commandes (à savoir les commandes de virage ou de montée/descente, car si l'utilisateur n'agit que sur la vitesse, le drone conservera son altitude et son cap, comme indiqué plus haut). Le module de vol autonome conserve alors le cap de cette trajectoire, en compensant si besoin le vent latéral.

L'utilisateur peut à tout moment reprendre la main (bloc 102), par exemple en actionnant un manche à balai, en appuyant sur un bouton, en touchant l'écran tactile, etc., ou bien adresser au drone un ordre de passage en vol autonome, par exemple d'atterrissage ou de mise en orbite (bloc 104). Cette action va générer une instruction externe de pilotage, reçue et détectée par le drone qui basculera alors en retour au mode de pilotage manuel assisté (bloc 102), ou en vol autonome (bloc 106), selon le cas. Dans une variante de mise en oeuvre, l'abandon du mode de pilotage automatique se produit dans les conditions ci-dessus, à l'exception de la réception d'une commande externe de vitesse, qui ne déclenche pas de retour au mode de pilotage manuel assisté ou à un mode de vol autonome.

Il s'agit de ménager ainsi à l'utilisateur la possibilité d'accélérer ou de ralentir le drone alors même que celui-ci poursuit sa trajectoire sous le contrôle du pilote automatique, avec les avantages procurés par le pilotage automatique, notamment la compensation des perturbations externes telles que celles résultant d'un vent latéral.

### Modes de vol autonome spécifiques

Le module de vol autonome embarqué peut contrôler le comportement du drone de manière à lui faire suivre des trajectoires particulières prépro-grammées.

Ainsi, sur une instruction de "mise en orbite" reçue de l'utilisateur, le module de vol autonome prend la main et génère des instructions permettant au drone de tourner indéfiniment en rond, sur des cercles plats par exemple de 30 m de rayon et sans perte d'altitude, ce mode de vol étant dénommé *loiter* dans la technique aéronautique.

La Figure 6 illustre ce mode de vol autonome de mise en orbite du drone 10 sur une orbite circulaire L.

Dès que l'utilisateur touche au manche à balai ou à toute autre commande, il reprend la main, le drone passant en mode de pilotage manuel assisté.

Dans une fonction de mise en sécurité, l'utilisateur peut à tout moment adresser une instruction au drone pour lui demander de revenir à son point de décollage, les coordonnées de ce point étant connues par les données du module GPS qui ont été conservées en mémoire. Le module de vol autonome prend alors la main et exécute les actions nécessaires. Avantageusement, si au moment du passage en mode automatique le drone est à une altitude inférieure à 50 m par exemple, le pilote automatique le fait remonter à 50 m pour engager la trajectoire de retour au point de décollage. Si au moment du passage en mode automatique le drone est à plus de 50 m d'altitude, il reste à son altitude courante pour entamer la phase de retour au point de décollage.

Une variante consiste à mémoriser l'altitude maximale prise par le drone dans la phase de vol précédant l'envoi de l'instruction de retour au point de décollage, et à faire remonter le drone à cette valeur d'altitude maximale avant d'entamer le retour automatique au point de décollage. Ceci permet par exemple d'éviter une colline qui aurait été survolée pendant le vol aller.

De façon comparable, lorsque la liaison du drone avec la télécommande est perdue, quelle qu'en soit la raison, une procédure de retour automatique au point de décollage est automatiquement initiée. Le drone vérifie le rétablissement éventuellement de la connexion au cours de cette phase de retour, et si aucune connexion n'est rétablie le drone effectue, comme illustré Figure 6, une orbite L autour du point de décollage H, puis atterrit au bout d'un temps prédéterminé, paramétrable, si la liaison radio n'est toujours pas rétablie, ce qui permet de ne pas perdre le drone si la batterie de la télécommande est déchargée.

Une autre possibilité offerte par le module de vol autonome est celle de gérer automatiquement la trajectoire du drone selon un plan de vol préétabli. Le plan de vol est déterminé préalablement par une série de "points de contrôle" ou *waypoints* et le module de vol autonome maintient le drone en vol et le dirige vers ces *waypoints* : le drone se dirige vers le *waypoint* courant du plan de vol selon une trajectoire rectiligne puis, lorsque le *waypoint* est atteint, il tourne autour de celui-ci suivant une trajectoire circulaire, par exemple avec un rayon de 30 m. Pour suivre au mieux le cercle, le module de vol autonome calcule des consignes en altitude et en roulis appropriées. Le drone détermine alors la direction entre le *waypoint* courant et le prochain *waypoint*, et asservit sa trajectoire suivant un nouveau cap, l'asservissement en cap étant déterminé en fonction de la distance entre la position estimée du drone (donnée par le GPS) et la ligne séparant les deux *waypoints.*

Enfin, le module de vol autonome permet, pour des raisons de sécurité, d'implémenter un "cylindre de vol", défini comme étant une zone dans laquelle le drone sera autorisé à évoluer, dont le centre est le point de décollage du drone, et qui est bornée en distance et en altitude (altitude minimale et altitude maximale).

Si le drone dépasse la distance maximale autorisée, le module de vol autonome reprend la main et ramène le drone en direction de l'utilisateur. Tant que le drone n'est pas revenu dans le cylindre de vol, le pilotage manuel, même assisté, n'est pas autorisé. Si le drone dépasse l'altitude maximale autorisée, le module de vol autonome le ramène automatiquement sous l'altitude maximale, et les instructions externes de montée que l'utilisateur pourrait envoyer ne seront pas prises en compte tant que le drone sera au-dessus de cette altitude plafond. De même, le drone ne pourra pas voler en dessous d'une altitude minimale, pour éviter tout risque d'accident par un vol trop près du sol.

### Décollage automatique

Le module de vol autonome permet de gérer de façon entièrement automatique le décollage du drone.

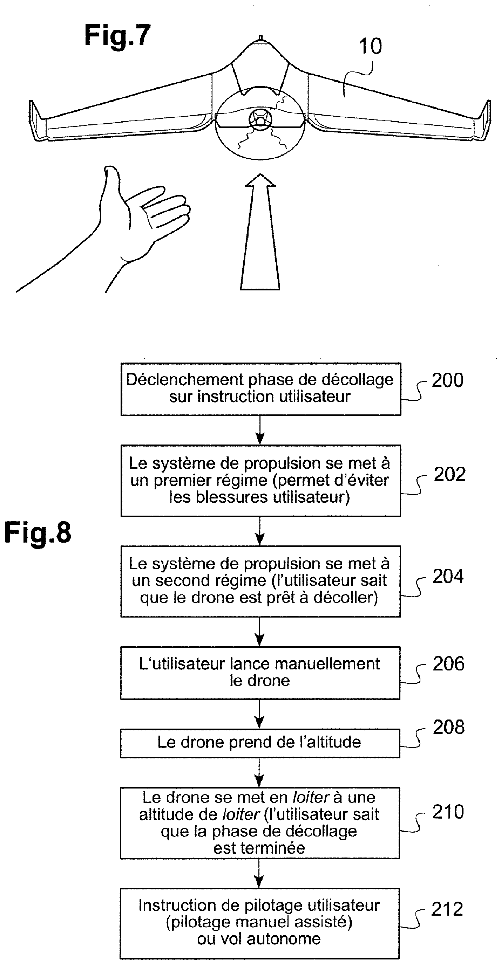

Cet aspect de l'invention est notamment illustré par la Figure 7 et par le diagramme d'étapes de la Figure 8.

L'utilisateur actionne un bouton approprié de la télécommande (bloc 200 de la Figure 8), ce qui a pour effet de mettre le moteur en fonctionnement à un premier régime, lent et sans danger pour l'utilisateur (bloc 202), puis à un second régime, plus rapide, qui indique à l'utilisateur que le drone est prêt à décoller (bloc 204)). L'utilisateur lance alors le drone face au vent (bloc 206, et illustration de la Figure 7) et le drone, contrôlé par le module de vol autonome, monte en ligne droite (bloc 208) par exemple avec une incidence de 30° jusqu'à 50 m d'altitude en maintenant son cap (c'est-à-dire que même en présence de vent latéral, le drone ne dévie pas de cette trajectoire). Par le biais des manches à balai, l'utilisateur peut éventuellement "surpiloter" le drone s'il souhaite changer le cap.

Une fois l'altitude atteinte (50 m dans l'exemple ci-dessus), le drone se met de manière entièrement autonome en orbite (voir ci-dessus), par exemple avec des cercles de 30 m de rayon (bloc 210). L'utilisateur a ainsi la garantie qu'en attendant de prendre les commandes le drone reste proche de l'endroit où il se trouve. Pendant cette phase d'orbite, le drone peut avantageusement recueillir les données des capteurs pour mesurer la direction et l'intensité du vent latéral.

Dès que l'utilisateur touche aux manches à balai de la télécommande ou à toute autre commande, il récupère alors la main (bloc 212), et le vol devient alors un vol en pilotage assisté, ou bien un mode de vol autonome ordonné par l'utilisateur, avec les caractéristiques décrites plus haut.

### Atterrissage automatique

L'atterrissage automatique est un autre mode géré par le module de vol autonome.

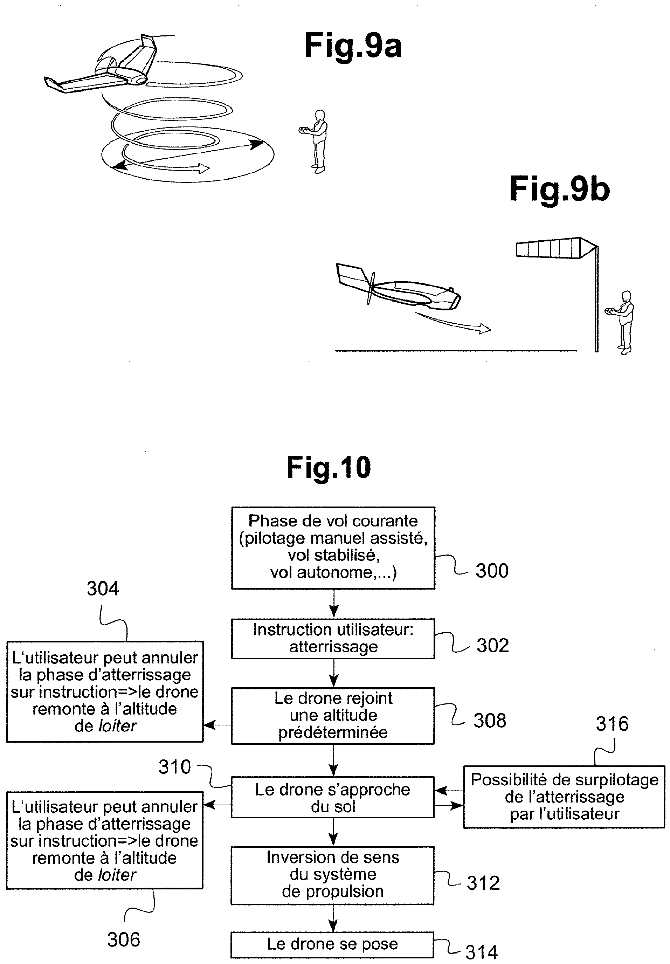

Cet aspect de l'invention est notamment illustré par les Figures 9a et 9b et par le diagramme d'étapes de la Figure 10.

L'utilisateur dispose sur sa télécommande d'une touche appropriée d'instruction d'atterrissage, qui, à partir de la phase de vol courante, qu'elle soit en mode manuel ou en vol autonome (bloc 300), déclenche (bloc 302) l'exécution de la procédure correspondante que l'on va décrire. S'il appuie à nouveau sur cette même touche (blocs 304, 306), la procédure d'atterrissage en cours est abandonnée.

L'atterrissage automatique peut être opéré en mode circulaire (le drone atterrissant en faisant une descente selon une trajectoire hélicoïdale d'un rayon prédéterminé, par exemple de rayon 30 m), ou en mode linéaire (le drone atterrissant en ligne droite).

Dans le cas d'un atterrissage circulaire, comme illustré Figure 9a, le drone effectue au moins un cercle complet en descendant par exemple à 25 m d'altitude (bloc 308), ce qui permet de mesurer la direction et la force du vent latéral. Dans un second temps, une fois cette mesure de vent effectuée, il initie la descente finale (bloc 310) selon une trajectoire hélicoïdale, en calculant la trajectoire idéale permettant d'arriver au niveau du sol face au vent. Durant la descente, lorsque le drone atteint une altitude et une vitesse prédéterminées le sens de rotation du groupe propulseur est inversé (bloc 312), ce qui permet au drone de freiner et d'arriver au sol (bloc 314) avec une vitesse faible permettant de minimiser l'impact du choc à l'atterrissage. On notera que, comme indiqué plus haut, l'utilisateur peut à tout moment annuler la procédure d'atterrissage (blocs 304, 306), le système basculant alors automatiquement en mode de décollage automatique pour permettre au drone de reprendre de l'altitude et de la vitesse.

Dans le cas d'un atterrissage linéaire, comme illustré Figure 9b, la phase finale de l'atterrissage est initiée lorsque le drone se trouve à faible altitude, par exemple une altitude de l'ordre de 3 à 5 m. Le drone freine avec rotation du moteur en sens inverse, pour toucher le sol à faible vitesse.

Il est également possible, dans une procédure d'"atterrissage assisté" d'autoriser une action de l'utilisateur pour que le drone descende en ligne droite en maintenant son cap, l'utilisateur opérant un "surpilotage" durant l'atterrissage (bloc 316) pour contrôler l'angle de roulis ainsi que l'angle de tangage.

## Revendications

1. Drone à voilure fixe (10), comprenant un système de propulsion (14, 28), des gouvernes (18) et un pilote automatique (24),
dans lequel le pilote automatique est configuré pour :
- calculer des consignes en fonction d'instructions,
lesdites instructions comprenant des instructions internes de pilotage générées par le pilote automatique et des instructions externes reçues par le drone,
lesdites instructions internes et/ou externes comprenant des instructions de virage, des instructions de montée/descente et des instructions de changement de vitesse,
lesdites consignes incluant une consigne d'angle de roulis (ϕ), une consigne d'angle de tangage (θ) et une consigne de vitesse (V) pour la mise en oeuvre des instructions internes et/ou externes ; et
- commander le système de propulsion et les gouvernes en fonction des consignes calculées,
le pilote automatique (24) étant en outre configuré pour :
- sur application d'une instruction de virage et/ou d'une instruction de changement de vitesse, calculer ladite consigne d'angle de roulis (ϕ), ladite consigne d'angle de tangage (θ) et ladite consigne de vitesse (V) de manière à effectuer un virage et/ou à changer de vitesse en maintenant constante une altitude (z) du drone lors du virage et/ou du changement de vitesse,
**caractérisé en ce que** le pilote automatique (24) est en outre configuré pour, sur cessation de réception d'au moins certaines desdites instructions externes de pilotage :
- générer ladite consigne d'angle de roulis (ϕ), ladite consigne d'angle de tangage (θ) et ladite consigne de vitesse (V) de manière à maintenir constants le cap et l'altitude qu'avait le drone au moment de ladite cessation de réception d'au moins certaines desdites instructions externes de pilotage.

2. Drone selon la revendication 1, dans lequel le pilote automatique (24) est en outre configuré pour, sur cessation de réception de toute instruction externe de pilotage :
- générer ladite consigne d'angle de roulis (ϕ), ladite consigne d'angle de tangage (θ) et ladite consigne de vitesse (V) de manière à maintenir en outre constante la vitesse qu'avait le drone au moment de ladite cessation de réception de toute instruction externe de pilotage.

3. Drone selon la revendication 1, dans lequel lesdites au moins certaines instructions externes de pilotage comprennent les instructions externes de pilotage en virage et les instructions externes de pilotage en montée/descente, et ne comprennent pas les instructions externes de pilotage en vitesse.

4. Drone selon la revendication 3, dans lequel le pilote automatique (24) est en outre configuré pour, sur réception d'instructions externes de pilotage en vitesse et sans réception d'instructions externes de pilotage en virage ni réception d'instructions externes de pilotage en montée/descente :
- continuer de générer ladite consigne d'angle de roulis (ϕ) et ladite consigne d'angle de tangage (θ) de manière à maintenir constants le cap et l'altitude qu'avait le drone au moment de ladite cessation de réception d'instructions externes de pilotage en virage et d'instructions externes de pilotage en montée/descente, et
- générer ladite consigne de vitesse (V) à partir des instructions externes de pilotage en montée/descente reçues.

5. Drone selon la revendication 3, dans lequel le pilote automatique (24) est en outre configuré pour, sur réception d'instructions externes de pilotage en virage ou d'instructions externes de pilotage en montée/descente :
- cesser de générer ladite consigne d'angle de roulis (ϕ), ladite consigne d'angle de tangage (θ) et ladite consigne de vitesse (V) qui avaient été générées de manière à maintenir constants le cap et l'altitude qu'avait le drone au moment de ladite cessation de réception d'instructions externes de pilotage en virage et d'instructions externes de pilotage en montée/descente.

6. Drone selon la revendication 1, dans lequel, dans un mode de fonctionnement autonome, le pilote automatique (24) est configuré pour générer des instructions internes de pilotage incluant des instructions de virage, des instructions de montée/descente, et/ou des instructions de vitesse.

7. Drone selon la revendication 1, dans lequel le pilote automatique (24) est configuré pour générer des instructions internes de pilotage selon un mode de décollage automatique avec une phase de montée à une altitude prédéterminée suivie d'une phase d'attente en vol orbital à l'altitude prédéterminée.

8. Drone selon la revendication 7, dans lequel le mode de décollage automatique comprend successivement : une phase de mise en fonctionnement du groupe propulseur du système de propulsion à un régime lent, une phase de mise en fonctionnement du groupe propulseur à un régime plus rapide, une phase de montée en ligne droite avec maintien du cap, et ladite phase d'attente en vol orbital lorsque ladite altitude prédéterminée est atteinte.

9. Drone selon la revendication 1, dans lequel le pilote automatique (24) est configuré pour générer des instructions internes de pilotage selon un mode d'atterrissage automatique avec superposition éventuelle, aux instructions de pilotage générées par le pilote automatique, d'instructions externes de pilotage reçues par le drone.

10. Drone selon la revendication 9, dans lequel le mode d'atterrissage automatique comprend successivement : une phase de descente à une altitude prédéterminée, une phase de descente selon une trajectoire hélicoïdale ou selon une trajectoire linéaire, et une phase d'inversion du sens de rotation du groupe propulseur du système de propulsion.

11. Drone selon la revendication 1, dans lequel le pilote automatique (24) est configuré pour calculer les consignes en fonction d'une différence entre la vitesse air du drone et la vitesse sol du drone.

12. Drone selon la revendication 1, dans lequel le pilote automatique (24) est configuré pour calculer les consignes de manière à voler à vitesse air constante ou à vitesse sol constante dans un mode de fonctionnement à vitesse constante.

13. Drone selon la revendication 1, dans lequel, pour la réalisation d'une instruction de virage, le pilote automatique (24) est configuré pour calculer les consignes de manière à réaliser le virage avec un taux de virage constant par rapport au sol.

14. Procédé de pilotage d'un drone à voilure fixe (10) comprenant un système de propulsion (14, 28), des gouvernes (18) et un pilote automatique (24), ce procédé comprenant des étapes consistant à :
- calculer des consignes en fonction d'instructions,
lesdites instructions étant des instruction de pilotage comprenant des instructions internes, générées par le pilote automatique, et/ou des instructions externes, reçues par le drone,
lesdites instructions internes et/ou externes comprenant des instructions de virage, des instructions de montée/descente et des instructions de changement de vitesse,
lesdites consignes incluant une consigne d'angle de roulis (ϕ), une consigne d'angle de tangage (θ) et une consigne de vitesse (V) pour la mise en oeuvre des instructions internes et/ou externes ;
- sur application d'une instruction de virage et/ou d'une instruction de changement de vitesse, calculer ladite consigne d'angle de roulis (ϕ), ladite consigne d'angle de tangage (θ) et ladite consigne de vitesse (V) de manière à effectuer un virage et/ou à changer de vitesse en maintenant constante une altitude (z) du drone lors du virage et/ou du changement de vitesse ; et
- commander le système de propulsion et les gouvernes du drone en
fonction des consignes calculées ;
**caractérisé en ce qu'**il comprend en outre une étape consistant, sur cessation de réception d'au moins certaines desdites instructions externes de pilotage, à :
- générer ladite consigne d'angle de roulis (ϕ), ladite consigne d'angle de tangage (θ) et ladite consigne de vitesse (V) de manière à maintenir constants le cap et l'altitude qu'avait le drone au moment de ladite cessation de réception d'au moins certaines desdites instructions externes de pilotage.

15. Procédé selon la revendication 14, dans lequel, sur cessation de réception de toute instruction externe de pilotage, ladite consigne d'angle de roulis (ϕ), ladite consigne d'angle de tangage (θ) et ladite consigne de vitesse (V) sont générées de manière à maintenir en outre constante la vitesse qu'avait le drone au moment de ladite cessation de réception de toute instruction externe de pilotage.

16. Procédé selon la revendication 14, dans lequel lesdites au moins certaines instructions externes de pilotage comprennent les instructions externes de pilotage en virage et les instructions externes de pilotage en montée/descente, et ne comprennent pas les instructions externes de pilotage en vitesse.

17. Procédé selon la revendication 16, comprenant en outre une étape consistant, sur réception d'instructions externes de pilotage en vitesse et sans réception d'instructions externes de pilotage en virage ni réception d'instructions externes de pilotage en montée/descente, à :
- continuer de générer ladite consigne d'angle de roulis (ϕ) et ladite consigne d'angle de tangage (θ) de manière à maintenir constants le cap et l'altitude qu'avait le drone au moment de ladite cessation de réception d'instructions externes de pilotage en virage et d'instructions externes de pilotage en montée/descente, et
- générer ladite consigne de vitesse (V) à partir des instructions externes de pilotage en montée/descente reçues.

18. Procédé selon la revendication 16, comprenant en outre une étape consistant, sur réception d'instructions externes de pilotage en virage ou d'instructions externes de pilotage en montée/descente, à :
- cesser de générer ladite consigne d'angle de roulis (ϕ), ladite consigne d'angle de tangage (θ) et ladite consigne de vitesse (V) qui avaient été générées de manière à maintenir constants le cap et l'altitude qu'avait le drone au moment de ladite cessation de réception d'instructions externes de pilotage en virage et d'instructions externes de pilotage en montée/descente.
